Europäisches Patentamt

European Patent Office

Office européen des brevets

(11) Veröffentlichungsnummer: **0 144 624**
**B1**

# EUROPÄISCHE PATENTSCHRIFT

(45) Veröffentlichungstag der Patentschrift:
03.05.89

(51) Int. Cl.⁴: **G 01 B 7/00**

(21) Anmeldenummer: **84112176.7**

(22) Anmeldetag: **11.10.84**

(54) **Tast- und/oder Messeinrichtung.**

(30) Priorität: **08.11.83 DE 3340311**

(43) Veröffentlichungstag der Anmeldung:
**19.06.85 Patentblatt 85/25**

(45) Bekanntmachung des Hinweises auf die Patenterteilung:
**03.05.89 Patentblatt 89/18**

(84) Benannte Vertragsstaaten:
**AT CH DE FR GB IT LI NL SE**

(56) Entgegenhaltungen:
**EP-A- 0 025 485**
**DE-A- 2 840 934**
**DE-A- 3 125 737**
**FR-A- 2 502 325**
**FR-A- 2 517 049**
**US-E- 30 975**

(73) Patentinhaber: **Dr. Johannes Heidenhain GmbH,
Nansenstrasse 17, D-8225 Traunreut (DE)**

(72) Erfinder: **Ernst, Alfons, Dipl.-Ing., Traunring 62,
D-8225 Traunreut (DE)**

## Beschreibung

Die Erfindung betrifft eine Tast- und/oder Meßeinrichtung gemäß dem Oberbegriff des Anspruchs 1.

Eine derartige Einrichtung wird in Verbindung mit Koordinatenmeßmaschinen und mit numerisch gesteuerten Bearbeitungsmaschinen eingesetzt und dient zur Ermittlung von Lage und/oder Abmessungen eines Prüfobjekts oder eines Werkstücks bzw. eines Werkzeugs.

In der DE-OS 2 840 934 ist eine Tasteinrichtung mit einem Gehäuse beschrieben, das in einer Werkzeugaufnahme der Spindel einer Werkzeugmaschine befestigt ist. Aus dem Boden des Gehäuses ragt ein Taststift mit einer Tastkugel heraus, der mittels einer Membran im Boden gelenkartig gelagert und am anderen Ende mit einer Platte verbunden ist; die Platte wird mittels einer Feder gegen den Boden gedrückt. Die Platte steht mit vier Meßwertwandlern in Kontakt, die jede Auslenkung des Taststiftes in axialer wie in radialer Richtung registrieren. Die Ausgangssignale der Meßwertwandler werden einer Signalaufbereitungseinrichtung zugeführt, die mit einer in der Abtasteinrichtung angeordneten Spannungsquelle verbunden ist. Die Signalaufbereitungstung wird durch einen Schalter eingeschaltet, der dann betätigt wird, wenn die Tastkugel auf eine Oberfläche des zu prüfenden Werkstücks aufgesetzt wird. Die Ausgangssignale der Signalaufbereitungseinrichtung werden drahtlos an eine externe Wiedergabeeinrichtung übertragen. Da zur Betätigung des Schalters eine relativ große axiale Verschiebung des Taststiftes erforderlich ist, wird die Meßgenauigkeit beeinträchtigt; zudem ist die Schaltsicherheit des Schalters vom Verschleiß und von der Schalthäufigkeit abhängig.

In der Druckschrift «Maschinenmarkt», Würzburg 88 (1982) 68 ist auf den Seiten 1374 und 1375 ein dreidimensionaler Meßtaster mit einer eingebauten Spannungsquelle in Form eines Akkumulators zur optischen Signalübertragung beschrieben. Erst beim Einsetzen des Meßtasters in die Werkzeugaufnahme der Spindel einer Werkzeugmaschine wird der Akkumulator zur Verlängerung seiner Lebensdauer von einem Bereitschaftsbetrieb mit geringem Stromverbrauch in einen Meßbetrieb mittels eines optischen Einschaltsignals von der Werkzeugmaschine her umgeschaltet. Diese optische Einrichtung zur Einschaltung des Meßbetriebs ist wegen der benötigten Bauelemente aufwendig und bei auftretender äußerer Verschmutzung von Sender und Empfänger sowie bei eventuell im Strahlengang befindlichen Fremdgegenständen nicht ausfallsicher; zudem kann es bei vielen Bearbeitungsmaschinen zu einer gegenseitigen Störbeeinflussung kommen.

Der Erfindung liegt die Aufgabe zugrunde, bei einer Tast- und/oder Meßeinrichtung der oben genannten Gattung eine einfach aufgebaute Einrichtung zum Umschalten der Spannungsversorgung vom Bereitschaftsbetrieb zum Meßbetrieb anzugeben, die weitgehend störunanfällig ist und die Meßgenauigkeit nicht beeinträchtigt. -

Diese Aufgabe wird erfindungsgemäß durch die kennzeichnenden Merkmale des Anspruchs 1 gelöst.

Die mit der Erfindung erzielten Vorteile bestehen insbesondere darin, daß durch das Erfassen einer Längsdehnung des Aufnahmeelements in der Werkzeugaufnahme eine einfach aufgebaute und preisgünstige Einrichtung zum Umschalten der Spannungsversorgung vom Bereitschaftsbetrieb zum Meßbetrieb ermöglicht wird, die nicht äußeren Störeinflüssen unterliegt, nicht verschleißbehaftet ist und sich nicht nachteilig auf die Meßgenauigkeit auswirkt. Durch die wesentlich erhöhte Ausfallsicherheit dieser Einrichtung wird eine maximale Lebensdauer der Spannungsversorgung in der Tast- und/oder Meßeinrichtung erzielt, so daß insbesondere bei automatischen Fertigungsabläufen kostenintensive Maschinenstillstandszeiten und Wartungszeiten erheblich reduziert werden.

Vorteilhafte Weiterbildungen der Erfindung entnimmt man den abhängigen Ansprüchen.

Ausführungsbeispiele der Erfindung werden anhand der Zeichnung näher erläutert.

Es zeigen

Figur 1 eine Tasteinrichtung mit einem Aufnahmeelement in einer Werkzeugaufnahme im Querschnitt;

Figur 2 eine Schaltungsanordnung und

Figur 3 einen Ausschnitt des Aufnahmeelements in der Werkzeugaufnahme im Teilschnitt.

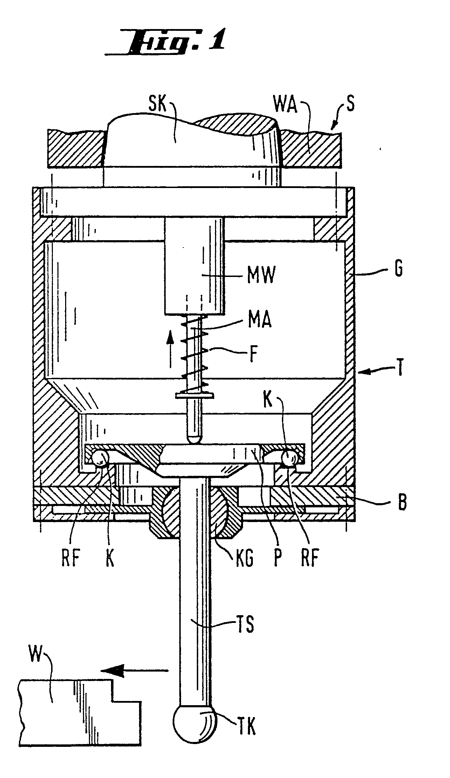

In Figur 1 ist eine Tasteinrichtung T im Querschnitt dargestellt, deren Gehäuse G mittels eines Aufnahmeelements SK in form eines Spannkegels in einer Werkzeugaufnahme WA einer Spindel S einer nicht gezeigten Werkzeugmaschine befestigt ist. Diese Werkzeugaufnahme WA dient gleichzeitig zur Befestigung von verschiedenen Werkzeugen, die in nicht dargestellter Weise aus einem Werkzeugmagazin mittels einer bekannten automatischen Werkzeugwechseleinrichtung für verschiedene Bearbeitungsvorgänge ausgewählt werden. Nach Abschluß einer Bearbeitung oder in einem geeigneten Zwischenstadium wird anstelle eines Werkzeugs die obige Tasteinrichtung T aus dem Magazin mittels der Werkzeugwechseleinrichtung in die Werkzeugaufnahme WA eingesetzt.

Das Gehäuse G der Tasteinrichtung T weist eine Bodenplatte B mit einem Kugelgelenk KG auf, durch das ein Taststift TS mit einer Tastkugel TK zum Antasten eines zu prüfenden Werkstücks W herausragt. Das andere Ende des Taststiftes TS ist im Inneren des Gehäuses G an einer Platte P befestigt, die an ihrer Peripherie auf mehreren äquidistant verteilten Kugeln K aufliegt, die auf einer der Bodenplatte B benachbarten Ringfläche RF beispielsweise durch Kitten befestigt sind. Im Inneren des Gehäuses G ist ein Meßwertwandler MW angeordnet, dessen (in Pfeilrichtung) axial beweglicher Meßwertaufnehmer MA unter der Wirkung einer Feder F im Zentrum der Platte P anliegt und diese gegen die Kugeln K drückt.

Beim Antasten des Werkstücks W mittels der Tastkugel TK wird der Taststift TS in radialer Richtung ausgelenkt, wodurch die Platte P eine Kippbewegung erfährt und sich über eine oder zwei Kugeln K abwälzt. Durch diese Kippbewegung wird der im Zentrum der Platte P angreifende Meßwertaufnehmer MA axial bewegt und beaufschlagt den Meßwertwandler MW, der je nach Bauart ein Signal abgibt, das entweder als Schaltsignal die Auslenkung der Tastkugel TK anzeigt oder aber ein der Auslenkung der Tastkugel TK proportionales Meßsignal darstellt. Nach der Antastung kehrt die Tastkugel TK in eine jederzeit reproduzierbare Nullstellung zurück. Das Kugelgelenk KG erlaubt sowohl beliebige radiale Auslenkungen der Tastkugel TK als auch eine Axialverschiebung des Taststiftes TS.

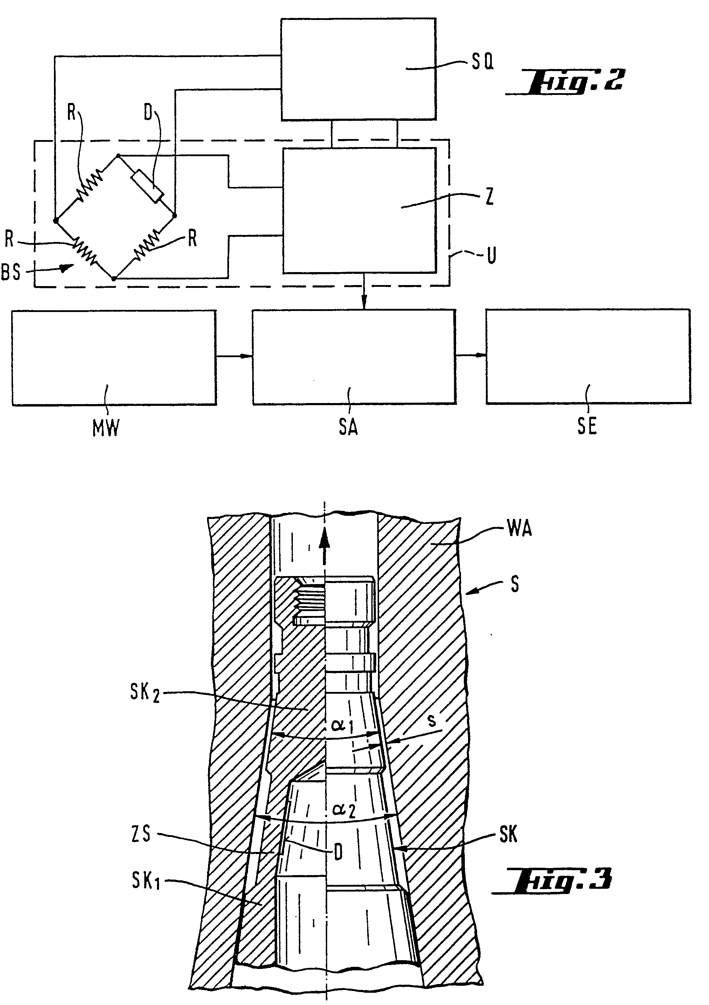

Das Schaltsignal bzw. das Meßsignal des Meßwertwandlers MW wird einer Signalaufbereitungseinrichtung SA zugeleitet, die an eine Spannungsquelle SQ in der Tasteinrichtung T angeschlossen ist (Figur 2).

Die Ausgangssignale der Signalaufbereitungseinrichtung SA werden beispielsweise drahtlos über eine Sendereinheit SE und eine nicht gezeigte externe Empfängereinheit an die Werkzeugmaschinensteuerung weitergeleitet.

Diese Spannungsquelle SQ in Form einer Gleichspannungsbatterie hat nur eine begrenzte Lebensdauer. Zur Erzielung einer möglichst langen Lebensdauer muß dafür gesorgt werden, daß die Spannungsquelle SQ nur beim eigentlichen Meßbetrieb während ihres Einsatzes an der Werkzeugmaschine eingeschaltet ist. Während der übrigen Zeit im Werkzeugmagazin befindet sich die Spannungsquelle SQ in einem Bereitschaftsbetrieb mit geringem Stromverbrauch.

Zum Umschalten der Spannungsquelle SQ vom Bereitschaftsbetrieb in den Meßbetrieb ist in der Tasteinrichtung T eine Schalteinrichtung U vorgesehen, die erfindungsgemäß von wenigstens einem eine Axialdehnung des Aufnahmeelements SK in der Werkzeugaufnahme WA erfassenden Sensor D beaufschlagt ist.

Die Schalteinrichtung U besteht aus einer Brückenschaltung BS und aus einem Schaltverstärker Z. Die Spannungsquelle SQ ist einmal über den Schaltverstärker Z an die Signalaufbereitungseinrichtung SA und zum anderen an eine Diagonale der Brückenschaltung BS angeschlossen; die Ausgangsleitungen der anderen Diagonale steuern den Schaltverstärker Z an. In den Zweigen der Brückenschaltung BS sind drei Widerstände R und der Sensor D in Form eines Dehnmeßstreifens angeordnet. Bei einer Änderung des Widerstandes des Dehnmeßstreifens D infolge einer Axialdehnung des Aufnahmeelements SK wird im Schaltverstärker Z die Spannungsquelle SQ an die Signalaufbereitungseinrichtung SA für den Meßbetrieb angeschaltet. Nach dem Entfernen des Aufnahmeelements SK aus der Werkzeugaufnahme WA ist die Axialdehnung des Aufnahmeelements SK aufgehoben und der von der Brückenschaltung BS nicht mehr angesteuerte Schaltverstärker Z schaltet die Spannungsquelle SQ vom Meßbetrieb wieder in den Bereitschaftsbetrieb für die Brückenschaltung BS mit geringem Stromverbrauch um.

In Figur 3 ist ein Ausschnitt des Aufnahmeelements SK der Tasteinrichtung T in Form des Spannkegels in der Werkzeugaufnahme WA in Form eines Hohlkegels der Spindel S der Werkzeugmaschine in einer oberen Fortsetzung der Figur 1 im Teilschnitt dargestellt. Der Spannkegel SK wird unter der Wirkung einer in Richtung der Spindel S wirkenden Spannkraft (Pfeilrichtung) in die Werkzeugaufnahme WA gezogen und ist so ausgebildet, daß er beim Einsetzen in die Werkzeugaufnahme WA wenigstens in einem Teilbereich eine Axialdehnung erfährt.

Zur Erzeugung der Axialdehnung ist der äußere Kegelwinkel $\alpha_1$ des Spannkegels SK geringfügig größer als der innere Kegelwinkel $\alpha_2$ des Hohlkegels WA, so daß beim Einsetzen des Spannkegels SK in den Hohlkegel WA zuerst der untere Kegelbereich (Basisbereich) des Spannkegels SK mit der Wandung des Hohlkegels WA in Kontakt gelangt, während der obere Kegelbereich von der Wandung des Hohlkegels WA einen radialen Abstand s aufweist. Durch Aufbringen einer bestimmten Spannkraft gelangt auch der obere Kegelbereich des Spannkegels SK in Kontakt mit der Wandung des Hohlkegels WA, so daß der Spannkegel SK eine bestimmte Axialdehnung erfährt.

Zur Erzeugung der Axialdehnung kann der Spannkegel SK auch aus einem unteren Teilkegel $SK_1$ und aus einem oberen Teilkegel $SK_2$ bestehen, die durch ein Zwischenstück ZS mit definierter Axialdehnbarkeit (Axialelastizität) miteinander verbunden sind. In bevorzugter Ausgestaltung sind das Zwischenstück ZS und die Teilkegel $SK_1$, $SK_2$ aus dem gleichen Material einstückig ausgebildet. Die definierte Axialdehnbarkeit wird durch bestimmte Querschnittsverminderungen des Zwischenstücks ZS erzielt. Der Dehnmeßstreifen D ist jeweils an einer der Axialdehnung unterworfenen Innenfläche des Aufnahmeelements SK befestigt.

Der Sensor D kann auch von einem piezoelektrischen Element, von einem induktiven Element oder von einem kapazitiven Element gebildet sein.

**Patentansprüche**

1. Tast- und/oder Meßeinrichtung zur Ermittlung von Lage und/oder Abmessungen eines Prüfobjekts mit einem Tastgehäuse (G) und einem am Tastgehäuse (G) befestigten Aufnahmeelement (SK) zum Einsetzen des Tastgehäuses (G) in eine Werkzeugaufnahme (WA) einer Spindel (S) einer Meßmaschine oder Bearbeitungsmaschine, mit einem Taststift (TS) und wenigstens einem vom Taststift (TS) beaufschlagten Meßwertwandler (MW) und mit einer im Tastgehäuse (G) befindlichen Spannungsquelle (SQ) zur Übertragung der Meßwerte sowie mit einer Schalteinrichtung (U) zum Umschalten der Spannungsquelle (SQ) von einem Bereitschaftsbetrieb in einen Meßbetrieb, dadurch gekennzeichnet, daß die Schalteinrichtung (U) zum Umschalten der Spannungsquelle (SQ) vom Bereitschaftsbetrieb in den Meßbetrieb von wenigstens einem eine Axialdehnung des Aufnahmeelements (SK) in der Werkzeugaufnahme (WA) erfassenden Sensor (D) beaufschlagt ist, und daß das Aufnahmeelement (SK) so ausgebildet ist, daß es beim Einsetzen in die Werkzeugaufnahme (WA) wenigstens in einem Teilbereich eine Axialdehnung erfährt.

2. Einrichtung nach Anspruch 1, dadurch gekennzeichnet, daß der Sensor (D) von einem Dehnmeßstreifen gebildet ist, der an einer der Axialdehnung unterworfenen Innenfläche des Aufnahmeelements (SK) befestigt ist.

3. Einrichtung nach Anspruch 1, dadurch gekennzeichnet, daß das Aufnahmeelement (SK) in Form eines Spannkegels in die als Hohlkegel ausgebildete Werkzeugaufnahme (WA) unter der Wirkung einer Spannkraft eingreift.

4. Einrichtung nach Anspruch 3, dadurch gekennzeichnet, daß der äußere Kegelwinkel $\alpha_1$ des Spannkegels (SK) zur Erzeugung einer Axialdehnung geringfügig größer als der innere Kegelwinkel $\alpha_2$ des Hohlkegels (WA) ist.

5. Einrichtung nach Anspruch 3, dadurch gekennzeichnet, daß der Spannkegel (SK) zur Erzeugung einer Axialdehnung aus zwei Teilkegeln (SK$_1$, SK$_2$) besteht, die durch ein Zwischenstück (ZS) mit definierter Axialdehnbarkeit miteinander verbunden sind.

6. Einrichtung nach Anspruch 5, dadurch gekennzeichnet, daß das Zwischenstück (ZS) und die Teilkegel (SK$_1$, SK$_2$) aus dem gleichen Material einstückig ausgebildet sind.

7. Einrichtung nach Anspruch 1, dadurch gekennzeichnet, daß die Schalteinrichtung (U) aus einer von der Spannungsquelle (SQ) beaufschlagten Brückenschaltung (BS) und aus einem nachgeschalteten Schaltverstärker (Z) besteht, der die Spannungsquelle (SQ) an eine Signalaufbereitungseinheit (SA) anschaltet.

8. Einrichtung nach Anspruch 1 und 7, dadurch gekennzeichnet, daß der Sensor (D) in einem Zweig der Brückenschaltung (BS) angeordnet ist.

9. Einrichtung nach Anspruch 1, dadurch gekennzeichnet, daß der Sensor (D) von einem piezoelektrischen Element, von einem induktiven Element oder von einem kapazitiven Element gebildet ist.

## Claims

1. Probe and/or measuring device for determining the position and/or dimensions of a test object with a probe housing (G) and a receiver element (SK) fixed on the probe housing (G) for fitting the probe housing (G) in a tool holder (WA) of a spindle (S) of a measuring machine or a working machine, with a sensing rod (TS) and at least one measured value transducer (MW) acted upon by the sensing rod (TS) and with a voltage source (SQ) located in the probe housing (G) for transmitting the measured value, as well as with a circuit arrangement (U) for switching the voltage source (SQ) from a standby state into a measuring state, characterized in that the circuit arrangement (U) for switching the voltage source (SQ) from the standby mode into the measuring mode is acted upon by at least one sensor (D) sending an axial extension of the receiver element (SK) in the tool holde (WA), and in that the receiver element (SK) is so formed that it experiences an axial extension at least in a partial region on insertion into the tool holder (WA).

2. Device according to claim 1, characterized in that the sensor (D) is formed from a strain measuring strip, which is fixed on an inner surface of the receiver element (SK) subject to the axial extension.

3. Device according to claim 1, characterized in that the receiver element (SK) in the form of a tensioning cone engages in the tool holder (WA) formed as a hollow cone under the action of a tensioning force.

4. Device according to claim 3, characterized in that the outer cone angle $\alpha_1$ of the tensioning cone (SK) is slightly greater than the inner cone angle $\alpha_2$ of the hollow cone (WA) for creating an axial extension.

5. Device according to claim 3, characterized in that the tensioning cone (SK) consists of two component cones (SK$_1$, SK$_2$) for creating an axial extension, which are connected together with defined axial extensibility by an intermediate piece (ZS).

6. Device according to claim 5, characterized in that the intermediate piece (ZS) and the component cones (SK$_1$, SK$_2$) are formed from the same material in one piece.

7. Device according to claim 1, characterized in that the circuit arrangement (U) consists of a bridge circuit (BS) responsive to the voltage source (SQ) and a following switch amplifier (Z), which switches the voltage source (SQ) to a signal processing unit (SA).

8. Device according to claim 1 and 7, characterized in that the sensor (D) is arranged in one arm of the bridge circuit (BS).

9. Device according to claim 1, characterized in that the sensor (D) is formed from a piezoelectric element, from an inductive element or from a capacitive element.

## Revendications

1. Dispositif palpeur et ou dispositif de mesure pour déterminer la position et/ou les dimensions d'un objet à contrôler, comportant un boîtier de palpeur (G) et, fixé à ce boîtier (G), un élément récepteur (SK) pour insérer ce boîtier (G) dans un logement d'outil (WA) d'une broche (S) d'une machine de mesure ou d'usinage, un doigt palpeur (TS), au moins un convertisseur de valeur mesurée (MW) attaqué par le doigt palpeur (TS), une source de tension (SQ) se trouvant dans le boîtier de palpeur (G) aux fins de transmission des valeurs mesurées, ainsi qu'un dispositif de commutation (U) pour faire passer la source de tension (SQ) d'un mode de disponibilité à un mode de mesure, caractérisé par le fait que le dispositif de commutation (U), pour faire passer la source de tension (SQ) du mode de disponibilité au mode de mesure, est attaquée par au moins un capteur (D) détectant une dilatation axiale de l'élément récepteur (SK) dans le logement d'outil (WA), et par le fait que l'élément récepteur (SK) est réalisé de manière à subir une dilatation axiale, au moins dans une région partielle, lors de l'insertion dans le logement d'outil (WA).

2. Dispositif selon revendication 1, caractérisé par le fait que le capteur (D) est constitué par une jauge extensométrique sous forme de bande qui est fixée sur une surface intérieure de l'élément récepteur (SK) soumise à la dilatation axiale.

3. Dispositif selon revendication 1, caractérisé par le fait que l'élément récepteur (SK) sous la forme d'un cône de serrage s'engage, sous l'action d'une force de serrage, dans le logement d'outil (WA) aménagé en tant que cône creux.

4. Dispositif selon revendication 3, caractérisé par le fait que, pour produire une dilatation axiale, l'angle extérieur $\alpha_1$ du cône de serrage (SK) est légèrement supérieur à l'angle intérieur $\alpha_2$ du cône creux (WA).

5. Dispositif selon revendication 3, caractérisé par le fait que, pour produire une dilatation axiale, le cône de serrage (SK) est constitué de deux cônes partiels (SK$_1$, SK$_2$) qui sont liés l'un à l'autre par une partie intermédiaire (ZS) ayant une dilatabilité axiale définie.

6. Dispositif selon revendication 5, caractérisé par le fait que la partie intermédiaire (ZS) et les cônes partiels (SK$_1$, SK$_2$) sont faits de la même matière, en une seule pièce.

7. Dispositif selon revendication 1, caractérisé par le fait que le dispositif de commutation (U) est constitué par un circuit en pont (BS) attaqué par la source de tension (SQ) et suivi par un amplificateur de commutation (Z) qui commute la source de tension (SQ) sur une unité de traitement de signal (SA).

8. Dispositif selon revendication 1 et 7, caractérisé par le fait que le capteur (D) est agencé dans une branche du circuit en pont (BS).

9. Dispositif selon revendication 1, caractérisé par le fait que le capteur (D) est constitué par un élément piézoélectrique, par un élément inductif ou par un élément capacitif.

# Fig. 1

**Fig. 2**

**Fig. 3**